# EUROPÄISCHE PATENTSCHRIFT

(11) **EP 3 329 026 B1**
(45) Veröffentlichungstag und Bekanntmachung des Hinweises auf die Patenterteilung: **06.05.2020**
(21) Anmeldenummer: 16742325.0
(22) Anmeldetag: 26.07.2016
(51) Int. Cl.: B21D 26/053, C21D 7/12, C22C 38/00, B21D 26/033, C21D 6/00, C21D 8/10, C21D 9/08, C22C 38/38, C22C 38/58, B23K 35/30, C22C 38/04, B23K 101/06

(54) **VERFAHREN ZUR HERSTELLUNG VON MIT INNENHOCHDRUCK UMGEFORMTER ROHRE AUS HOCHLEGIERTEM STAHL**
METHOD FOR THE MANUFACTURING OF HYDROFORMED TUBES OF HIGH-ALLOYED STEEL
PROCEDE DE FABRICATION DE TUBES HYDROFORMES EN ACIER FORTEMENT ALLIÉ

(30) Priorität: 27.07.2015 DE 102015112215
(43) Veröffentlichungstag der Anmeldung: 06.06.2018
(73) Patentinhaber: Salzgitter Flachstahl GmbH, 38239 Salzgitter (DE)
(72) Erfinder: EVERTZ, Thomas, 31228 Peine (DE); REDENIUS, Alexander, 38124 Braunschweig (DE); OTTO, Manuel, 38162 Cremlingen (DE); PALZER, Peter, 38704 Liebenburg (DE)
(74) Vertreter: Moser Götze & Partner Patentanwälte mbB
(86) Internationale Anmeldenummer: PCT/EP2016/067824
(87) Internationale Veröffentlichungsnummer: WO 2017/017107

(56) Entgegenhaltungen:
- EP-A1- 0 889 145
- EP-A1- 1 715 073
- WO-A1-2009/090231
- WO-A1-2011/138503
- WO-A1-2012/143610
- WO-A1-2014/180456
- DE-A1-102011 121 679
- US-A1- 2010 294 402
- US-A1- 2013 039 801
- D. ELSENHEIMER ET AL: "Determination of material properties for hot hydroforming", PRODUCTION ENGINEERING, Bd. 3, Nr. 2, 1. Juni 2009 (2009-06-01), Seiten 165-174, XP055303860, DE ISSN: 0944-6524, DOI: 10.1007/s11740-009-0156-2
- Taylan Altan ET AL: "Sheet Metal Forming-Processes and Applications" In: "Sheet Metal Forming-Processes and Applications", 1 August 2012 (2012-08-01), ASM International, XP055573130, ISBN: 978-1-61503-844-2 pages 179-210, * Sub-chapter 9.3 *

## Beschreibung

Die Erfindung betrifft ein Verfahren zur Herstellung eines innenhochdruckumgeformten Rohres aus einem hochlegierten Stahl mit TRIP- und/oder TWIP-Eigenschaften und mit einem teilweise oder vollständig austenitischen Gefüge mit mindestens 5 % Restaustenit.

Unter hochlegierten Stählen werden nachfolgend Stähle verstanden, die zur Verbesserung der Korrosionseigenschaften und/oder der Kaltumformbarkeit zum Beispiel mit Chrom, Nickel und eventuell weiteren Legierungselementen legiert wurden. Als Beispiel hierfür sei der Stahl 1.4301 (X5CrNi18-10) oder der Stahl 1.4618 (X9CrMnNiCu17-8-5-2) genannt. Diese Stähle weisen im Wesentlichen ein austenitisches Gefüge auf.

Das Innenhochdruckumformen von Rohren ist seit langem bekannt und wird beispielsweise in der Offenlegungsschrift DE 10 2008 014 213 A1 ausführlich beschrieben. Hierbei werden die Werkstücke aus einem in ein die fertige Werkstück-Geometrie aufweisendes, mindestens zweiteiliges Werkzeug eingelegten rohrförmigen Hohlprofilrohling in der Weise erzeugt, dass der Hohlprofilrohling mit einem hohen Fluiddruck innenseitig beaufschlagt und in die Gravur bzw. Geometrie des Werkzeugs aufgeweitet wird. Der Werkstoff muss dabei so ausgelegt sein, dass die hohen Umformungen ohne Werkstoffversagen aufgenommen werden können.

Die Verwendung von rostfreien Edelstählen zur Herstellung von mit Innenhochdruck umgeformten Rohren wird in der Gebrauchsmusterschrift DE 296 12 387 U1 beschrieben. Eine konkrete Legierungszusammensetzung des verwendeten Stahls wird in dieser Schrift nicht offenbart.

Bekannte hochlegierte Stähle, wie zum Beispiel der Stahl 1.4301, die grundsätzlich auch zur Herstellung von Innenhochdruck-umgeformten Rohren verwendet werden können, weisen den Nachteil auf, dass der Stahl durch den hohen Ni-Gehalt relativ teuer ist und das Kaltumformvermögen des Werkstoffs bei der InnenhochdruckUmformung fallweise noch nicht ausreichend hoch ist.

Die Offenlegungsschrift EP 1 715 073 A1 offenbart einen austenitisch-ferritischen Edelstahl mit guten Umformeigenschaften. Wegen der guten Tiefzieh- und Streckungseigenschaften eignet sich dieser Edelstahl auch für das Innenhochdruckumformen von Rohren. Der Edelstahl hat beispielsweise folgende chemische Zusammensetzung (jeweils in Masse-%): C: 0,013; N: 0,18; Si: 0,31; Mn: 3,01; P: 0,030; S: 0,003; Cr: 18,95; Ni: 0,51; Cu: 0,51. Auch weist der Edelstahl TRIP-Eigenschaften auf, die mit einer Austenitgefügephase von 10 bis 85 % einhergehen. Ein Verfahren zum Herstellen von Kaltband aus diesem Edelstahl weist beispielsweise die folgenden Schritte auf: Gießen von Brammen aus dem Edelstahl, Erwärmen der Brammen auf 1250 °C, Warmwalzen der Brammen zu Warmband, Glühen des Warmbandes bei 1100 °C für 1 Minute; Kaltwalzen bei einer Temperatur zwischen Raumtemperatur und 300 °C, Fertigglühen des Kaltbandes bei 1250 °C für 1 Minute. Das kaltgewalzte und geglühte Band hat eine Dicke von 0,8 mm. Der Prozentsatz der Austenitphase dieses Kaltbandes ist 56.

In der Offenlegungsschrift EP 0 889 145 A1 ist ein weiterer austenitisch-ferritischer Stahl mit hoher Zugdehnung beschrieben. Als Einsatzgebiet für den Stahl ist unter anderem die Herstellung von Rohren und die Weiterverarbeitung der Rohre in Automobilteile mittels Hochdruckumformen vorgesehen. Der Stahl hat folgende chemische Zusammensetzung (in Gewichts-%): C: < 0,04; Si 0,4 - 1,2; Mn: 2 - 4; Ni: 0,1 - 1; Cr: 18 - 22; Cu: 0,05 - 4; S: < 0,03; P: < 0,1; N: 0,1 - 0,3; Mo < 0,3. Auch wird von einer zuginduzierten Umwandlung und Härtung von Austenit in Martensit im Zusammenhang mit einer Temperatur von 1040 °C gesprochen. Die Austenitgehälte nach der Umwandlung werden für Beispiele B und C mit 36 und 25 % angegeben.

In einem Fachartikel aus der Fachzeitschrift Production Engineering, 1. Juni 2009, Seiten 165-174, mit dem Titel "Determination of material properties for hot hydroforminig" von D. Elsenheimer et al. werden zwei Möglichkeiten für ein Warm-Hochdruckumformen beschrieben. Demnach ist entweder das umzuformende Werkstück zu temperieren oder zusätzlich auch das Umformwerkzeug zu erhitzen. Hierbei sind Prozesstemperaturen von über 100 °C mit Wasser als Wirkmedium wegen des Siedepunkts von Wasser nicht möglich. Bis zu einer Prozesstemperatur von unter 300 °C können hitzestabile Öle verwendet werden. Bei Temperaturen oberhalb von 300 °C kommt Gas zum Einsatz, das aufgrund seiner geringen Wärmeleitfähigkeit nicht temperiert werden muss. Für eine Aluminiumlegierung AlMgSi0.5 werden Versuche in einem Temperaturbereich von 480 bis 575 °C durchgeführt und ausgewertet, um das Verhalten eines Werkstoffs beim Warm-Hochdruckumformen zu erfassen.

In dem Lehrbuch "Sheet Metal Forming - Processes and Applications" von Taylan Altan et al., 1. August 2012, ASM International ist in dem Kapitel 9 "Tube Hydroforming", Seiten 179 - 210 allgemein beschrieben, dass das Innenhochdruckumformen von Rohren in der Automobil-, Motorrad- und Fahrrad-Industrie zur Anwendung kommt. Für das Innenhochdruckumformen können Rohre aus Werkstoffen mit gutem Kaltumformvermögen verwendet werden. Das Umformvermögen kann durch Erhöhen der Umformtemperaturen verbessert werden. Stahl und Aluminiumlegierungen werden üblicherweise in den vorgenannten Einsatzgebieten verwendet.

Auch die Offenlegungsschrift US 2013/0039801 A1 beschreibt einen martensitischen Stahl mit guten Schweißeigenschaften bestehend aus -jeweils in Gew.-%: C: 0,003 bis 0,03; Si: 0,01 bis 1; Mn: 3 bis 6; P: 0,05 oder weniger; S: 0,003 oder weniger; Ni 1 bis 3; Cr: 15 bis 18; Mo: 0 bis 1; Cu: 0 bis 2; Ti: 0 bis 0,05; N: 0,05 oder weniger; Al: 0,001 bis 0,1 und O: 0,005 oder weniger, Rest Eisen und unvermeidbare Verunreinigungen.

Eine bessere Kaltumformbarkeit weist zwar der Stahl 1.4618 durch die Zulegierung von Kupfer auf, jedoch ist die Herstellung von Kaltbändern aus den bekannten Stählen über die bekannte Erzeugungsroute Stranggießen, Warmwalzen, Kaltwalzen mit Zwischenglühungen, Einformen des Kaltbandes zu einem geschlitzten Rohr, Verschweißen des Rohres, sehr teuer und damit unwirtschaftlich.

Vor dem Hintergrund des beschriebenen Standes der Technik bestand die Aufgabe der Erfindung darin, ein kostengünstiges Verfahren zur Herstellung von IHU-Rohren aus diesem Stahl anzugeben.

Ein erfindungsgemäßes Herstellverfahren zur Erzeugung von mit Innenhochdruck umgeformten Rohren aus einem hochlegierten Stahl mit hohem Kaltumformvermögen, mit TRIP- und/oder TWIP-Eigenschaften und mit einem teilweise oder vollständig austenitischen Gefüge mit mindestens 5 % Restaustenit wird durch folgende Arbeitsschritte bereitgestellt:
- Erschmelzen einer Stahlschmelze mit folgender chemischen Zusammensetzung (in Gew. %):
   Cr: 7 bis 20
   Mn: 2 bis 9
   Ni: bis zu 9
   C: 0,005 bis 0,4
   N: 0,002 bis 0,3
   Rest Eisen einschließlich unvermeidbarer stahlbegleitender Elemente, mit optionaler Zulegierung folgender Elemente (in Gew. %):
   Al: 0 bis 3
   Si: 0 bis 2
   Mo: 0,01 bis 3
   Cu: 0,005 bis 4
   V: 0 bis 2
   Nb: 0 bis 2
   Ti: 0 bis 2
   Sb: 0 bis 0,5
   B: 0 bis 0,5
   Co: 0 bis 5
   W: 0 bis 3
   Zr: 0 bis 2
   Ca: 0 bis 0,1
   P: 0 bis 0,6
   S: 0 bis 0,2
- Herstellen eines Vorbandes mittels eines endabmessungsnahen horizontalen oder vertikalen Gießverfahrens oder Herstellen von Brammen mittels eines horizontalen oder vertikalen Brammen- oder Dünnbrammengießverfahren, wobei als endabmessungsnahe Gießverfahren das horizontale Bandgießen oder das vertikale Bandgießen verwendet werden, wobei Banddicken des Vorbandes von 1 bis 30 mm, vorteilhaft 1 bis 20 mm, erzeugt werden,
- Herstellung eines Warmbandes durch Warmwalzen des Vorbandes mit einer Dicke größer oder gleich 2 mm oder durch Warmwalzen der Bramme, wobei das gegossene Vorband oder die Bramme warmgewalzt wird, wobei die Warmwalzstarttemperatur mindestens 900 bis 1200 °C und die Endwalztemperatur mindestens 650 °C beträgt,
- Optionales Kaltwalzen des Warmbandes oder Kaltwalzen des Vorbandes mit einer Dicke kleiner als 2 mm,
- Einformen des Warm- oder Kaltbandes und Verschweißen zu einem Rohr und
- Innenhochdruckumformen des Rohres mittels eines Wirkmediums und das Wirkmedium auf 40 bis 300 °C, vorzugsweise auf 80 bis 240 °C, temperiert wurde.

Der Stahl weist als wesentliche Bestandteile bei einem C-Gehalt von 0,005 bis 0,4 Gew.-% und einem N-Gehalt von 0,002 bis 0,3 Gew.-%, insbesondere einen hohen Cr-Gehalt von 7 bis 20 Gew.-% und Mn-Gehalt von 2 bis 9 Gew.-% auf. Die Verwendung des Begriffs bis beziehungsweise bis zu in den Definitionen der Gehaltsbereiche, wie beispielsweise 7 bis 20 Gew.-%, bedeutet, dass die Eckpunkte - im Beispiel 7 und 20 - mit eingeschlossen sind.

Bei dem erfindungsgemäßen Verfahren wird eine erfindungsgemäße Legierung mittels eines endabmessungsnahen Gießverfahrens oder konventionellem Strangguss erzeugt und anschließend warm- und/oder kaltgewalzt. Das so gefertigte Warm- oder Kaltband wird anschließend eingeformt und bspw. mittels Hochfrequenz-Induktionsschweißen oder Laserschweißen zu einem Rohr gefügt. Es können aber auch andere für die Rohrherstellung gängige Fügeverfahren, wie z.B. Unterpulverschweißen oder Metall-Schutzgasschweißen, angewendet werden.

Das Rohr wird anschließend einer Innenhochdruckumformung (IHU) unterzogen, wobei das Wirkmedium beim Innenhochdruckumformen auf eine Temperatur von 40 bis 300 °C, wobei der optimale Bereich bei 80 bis 240 °C liegt, temperiert wird, was eine weitere wesentliche Steigerung der Umformbarkeit des erfindungsgemäßen Stahls bewirkt.

Durch die Temperierung des Mediums wird die Stabilität und die Stapelfehlerenergie des Austenits erhöht, wodurch die spannungsinduzierte Martensitumwandlung unterdrückt und der TWIP-Effekt bevorzugt wird. Somit wird das Umformvermögen des Werkstoffs gegenüber einer Umformung bei Raumtemperatur deutlich verbessert.

Diese Verbesserung der Umformeigenschaften ermöglicht des Weiteren, dass ansonsten notwendigerweise der Innenhochdruckumformung vorgeschaltete Glühprozesse verkürzt werden oder entfallen können, wodurch der Energiebedarf und damit verbunden die Kosten zur Herstellung eines IHU-Rohrs aus diesem Werkstoff deutlich reduziert werden.

Erfindungsgemäß wird bei diesem Werkstoff der temperaturabhängige TRIP (Transformation Induced Plasticity)- bzw. /TWIP (Twinning Induced Plasticity)-Effekt ausgenutzt, der eine enorme Steigerung der Kaltumformbarkeit des Stahls beim Innenhochdruckumformen des Rohres ermöglicht. Diese Effekte treten bei hochlegierten austenitischen oder hochmanganhaltigen Stählen auf und sind bei plastischer Verformung des Stahls durch die Bildung von Verformungsmartensit (TRIP-Effekt) oder durch Zwillingsbildung bei der Verformung (TWIP-Effekt) gekennzeichnet.

Der für die Herstellung der IHU-Rohre verwendete Werkstoff zeichnet sich, abhängig von der konkreten Legierungszusammensetzung, durch ein teilweise oder vollständig austenitisches Gefüge mit mindestens 5 % Restaustenit aus, welcher erfindungsgemäß bei einer mechanischen Beanspruchung einen TWIP- und/oder TRIP-Effekt bewirkt.

Vorteilhafte Legierungszusammensetzungen des für die Rohrherstellung verwendeten Stahls sind in den Ansprüchen 2 bis 6 beschrieben.

Eine Legierung nach Anspruch 2 bildet aufgrund des Cr-Gehalts von mindestens 10 Gew.-% eine dichte Oxidschicht an der Oberfläche aus, wobei die vor Korrosion schützende Wirkung der Oxidschicht bei den erfindungsgemäßen Stählen bei Cr-Gehalten von größer 18 Gew.-% nicht merklich verbessert wird. Ein Nickelanteil von 2 bis 6 Gew.-% stabilisiert den Austenit insoweit, dass ein mindestens teilaustenitisches Gefüge entsteht, welches bei Einwirken von mechanischen Spannungen einen TRIP-/TWIP-Effekt bewirkt.

Gehalte von über 6 Gew.-% Ni führen zu einer weiteren Austenitstabilisierung, was zu Lasten des Anteils an Ferrit und Martensit im Gefüge geht und somit die Festigkeitseigenschaften des Materials verschlechtert.

Eine Legierung nach Anspruch 3 bildet aufgrund ihres Cr-Gehalts von mindestens 12 Gew.-% eine dichte Oxidschicht, wobei höhere Gehalte an Verunreinigungen und Karbiden im Vergleich zu einer Legierung nach Anspruch 2 toleriert werden können. Gehalte oberhalb von 17 Gew.-% Cr verringern die Dehnungseigenschaften und bringen für den erfindungsgemäßen Stahl keinen Vorteil.

Eine vorteilhafte Legierung enthält Mn in einem Gehalt von 2 bis 7 Gew.-%. Mangan erhöht die Austenitstabilität und sorgt somit für ein zumindest teilweise austenitisches Gefüge, welches bei Einwirken von mechanischen Spannungen einen TRIP-/TWIP-Effekt bewirkt. Um einen entsprechenden Effekt zu erreichen, beträgt der Mindestgehalt an Mangan 2 Gew.-%. Mn-Gehalte oberhalb 7 Gew.-% erhöhen die Anfälligkeit gegenüber Lochkorrosion, weshalb der Gehalt bei der erfindungsgemäßen Legierung vorteilhaft auf max. 7 Gew.-% beschränkt wird.

Eine weitere vorteilhafte Legierung enthält zwischen 0,5 und 5 Gew.-% Ni. Nickel dient als Austenit stabilisierendes Element und bewirkt ein zumindest teilweise austenitisches Gefüge, welches bei Einwirken von mechanischen Spannungen einen TRIP-/TWIP-Effekt bewirkt. Des Weiteren verbessert Ni die Beständigkeit gegenüber Lochkorrosion und erhöht die Festigkeit des Werkstoffs. Um einen entsprechenden Effekt zu erreichen, beträgt der Mindestgehalt an Nickel deshalb 0,5 Gew.-%. Gehalte oberhalb 5 Gew.-% führen neben erhöhten Legierungskosten zu einer erhöhten Austenitstabilität, welche aufgrund der Verringerung der Ferrit- und Martensitanteile im Gefüge und der damit verbundenen Abnahme der Festigkeit unerwünscht ist.

Eine weitere vorteilhafte Legierung enthält mindestens eines der Elemente V, Nb und/oder Mo mit einem Mindestgehalt von 0,005 Gew.-% für das einzelne Element und einen Maximalgehalt von in Summe < 5 Gew.-%. Diese Elemente wirken im Stahl als Karbid-, Nitrid- oder Karbonitridbildner und bewirken dadurch sowohl eine Stabilisierung gegen Alterung durch Abbinden der Elemente C und N und damit verbunden auch eine Verfestigung durch Ausscheidungsbildung, als auch eine Kornfeinung und die damit verbundene Erhöhung der Festigkeit und Zähigkeit. Um eine entsprechende Wirkung zu entfalten, ist ein Mindestgehalt für das einzelne Element von 0,005 Gew.-% notwendig. Gehalte ab in Summe 5 Gew.-% führen bei höheren Kohlenstoffgehalten zur Ausscheidung großer Mengen an Karbiden und verschlechtern die Eigenschaften der Legierung. Des Weiteren ist durch Gehalte von in Summe 5 Gew.-% oder mehr keine weitere Verbesserung der Eigenschaften zu erwarten.

Eine weitere vorteilhafte Legierung enthält zwischen 0,005 und 2 Gew.-% Ti und weist einen Maximalgehalt an N von unter 300 ppm auf. Titan wirkt als Karbidbildner und bewirkt eine Kornfeinung, wodurch gleichzeitig die Festigkeit und die Zähigkeitseigenschaften verbessert werden. Um eine entsprechende Wirkung zu entfalten, ist ein Mindestgehalt an Ti von 0,005 Gew.-% notwendig. Gehalte an Ti von über 2 Gew.-% bewirken keine weitere Verbesserung der Eigenschaften. Der N-Gehalt wird bei diesen Legierungen auf unter 300 ppm begrenzt um die Bildung unerwünschter TiN-Ausscheidungen zu minimieren.

Eine weitere vorteilhafte Legierung enthält zwischen 0,05 und 3 Gew.-% Al und weist einen N-Gehalt von unter 300 ppm auf. Aluminium bewirkt neben einer Desoxidation der Schmelze eine Verringerung der spezifischen Dichte und verbessert die Korrosionseigenschaften. Des Weiteren verbessert Al die Festigkeit der erfindungsgemäßen Legierung. Um eine entsprechende Wirkung zu entfalten, ist ein Mindestgehalt an Al von 0,05 Gew.-% notwendig. Gehalte von über 3 Gew.-% Al können zur Ausscheidung unerwünschter Phasen führen. Der N-Gehalt wird auf unter 300 ppm begrenzt um die unerwünschte Ausscheidung von nadelförmigen AIN zu vermindern.

Eine weitere vorteilhafte Legierung enthält 0,03 bis 2 Gew.-% Si. Silizium wirkt hierbei desoxidierend, senkt die spezifische Dichte und erhöht die Festigkeit der erfindungsgemäßen Legierung. Um eine entsprechende Wirkung zu entfalten, ist ein Mindestgehalt an Si von 0,03 Gew.-% notwendig. Gehalte von über 2 Gew.-% Si reduzieren die Dehnungseigenschaften und vermindern das Umformvermögen der erfindungsgemäßen Legierung.

Eine weitere vorteilhafte Legierung enthält zwischen 0,05 und 4 Gew.-% Cu. Kupfer verbessert die Korrosions- und Festigkeitseigenschaften der erfindungsgemäßen Legierung. Um eine entsprechende Wirkung zu entfalten, ist ein Mindestgehalt an Cu von 0,05 Gew.-% notwendig. Gehalte von über 4 Gew.-% Cu verschlechtern die Verarbeitbarkeit des Materials durch Bildung niedrig schmelzender Phasen während der Warmumformung bzw. dem Gießen und führen zu keinen weiteren Eigenschaftsverbesserungen.

Eine weitere vorteilhafte Legierung enthält zwischen 0,005 und 0,5 Gew.-% Sb. Antimon verringert die C-, N-, O- und Al-Diffusion, wodurch insbesondere Karbide, Nitride und Karbonitride feiner ausgeschieden werden. Dadurch werden sowohl die effektive Ausnutzung dieser Legierungselemente verbessert, was die Wirtschaftlichkeit erhöht und den Ressourcenverbrauch senkt, als auch die Festigkeits-, Dehnungs- und Zähigkeitseigenschaften verbessert. Um die erfindungsgemäße Wirkung zu erreichen ist ein Sb-Gehalt von mindestens 0,005 Gew.-% notwendig. Gehalte oberhalb 0,5 Gew.-% führen zur unerwünschten Ausscheidung von Sb an den Korngrenzen und somit zur Verschlechterung der Dehnungs- und Zähigkeitseigenschaften.

Eine weitere vorteilhafte Legierung enthält 0,0002 bis 0,5 Gew.-% B. Bor bewirkt eine Verbesserung der Festigkeitseigenschaften und der Kantenqualität an gewalztem Warmband bereits ab einer geringen Zugabe von 0,0002 Gew.-%. Gehalte oberhalb 0,5 Gew.-% verschlechtern die Zähigkeits- und Dehnungseigenschaften der erfindungsgemäßen Legierung stark.

Eine weitere vorteilhafte Legierung enthält zwischen 0,05 und 5 Gew.-% Co. Kobalt stabilisiert den Austenit und verbessert die Warmfestigkeit. Um eine entsprechende Wirkung zu entfalten, ist ein Mindestgehalt von 0,05 Gew.-% notwendig. Der maximale Gehalt wird auf 5 Gew.-% begrenzt, da höhere Co-Gehalte die Dehnungseigenschaften verschlechtern und den Austenit ungewünscht zusätzlich stabilisieren, wodurch der Ferrit- und Martensitgehalt und damit verbunden die Festigkeitseigenschaften abnehmen.

Eine weitere vorteilhafte Legierung enthält zwischen 0,005 und 3 Gew.-% W. Wolfram wirkt als Karbidbildner und verbessert die Festigkeit und die Warmfestigkeit. Um eine entsprechende Wirkung zu entfalten, ist ein Mindestgehalt von 0,005 Gew.-% notwendig. Gehalte von mehr als 3 Gew.-% W verschlechtern in der erfindungsgemäßen Legierung die Dehnungseigenschaften.

Eine weitere vorteilhafte Legierung enthält zwischen 0,005 und 2 Gew.-% Zr. Zirkon wirkt als Karbidbildner und verbessert die Festigkeit der erfindungsgemäßen Legierung. Um eine entsprechende Wirkung zu entfalten, ist ein Mindestgehalt von 0,005 Gew.-% notwendig. Gehalte von mehr als 2 Gew.-% verschlechtern die Dehnungseigenschaften der erfindungsgemäßen Legierung.

Eine weitere vorteilhafte Legierung enthält zwischen 0,0005 und 0,1 Gew.-% Ca. Kalzium wird zur Modifikation nichtmetallischer oxidischer Einschlüsse genutzt, welche sonst zu einem unerwünschten Versagen der Legierung durch Einschlüsse im Gefüge, welche als Spannungskonzentrationsstellen wirken und den Metallverbund schwächen, führen könnten.

Des Weiteren verbessert Ca die Homogenität der erfindungsgemäßen Legierung. Um eine entsprechende Wirkung zu entfalten, ist ein Mindestgehalt von 0,0005 Gew.-% notwendig. Gehalte von oberhalb 0,1 Gew.-% Ca bringen keinen weiteren Vorteil bei der Einschlussmodifikation, verschlechtern die Herstellbarkeit und sollten aufgrund des hohen Dampfdrucks von Ca in Stahlschmelzen vermieden werden.

Eine weitere vorteilhafte Legierung enthält zwischen 0,008 und 0,6 Gew.-% P. Phosphor erhöht die Dehngrenze und verbessert die Korrosionsbeständigkeit gegenüber atmosphärischen Einflüssen. Um eine entsprechende Wirkung zu entfalten, ist ein Mindestgehalt von 0,008 Gew.-% notwendig. Gehalte von mehr als 0,6 Gew.-% P verschlechtern die Dehnungseigenschaften der erfindungsgemäßen Legierung.

Eine weitere vorteilhafte Legierung enthält zwischen 0,01 und 0,2 Gew.-% S. Schwefel verbessert die spanende Bearbeitbarkeit. Um eine entsprechende Wirkung zu entfalten, ist ein Mindestgehalt von 0,01 Gew.-% notwendig. Gehalte von über 0,2 Gew.-% S führen zur unerwünschten Ausscheidung von MnS und zu einer starken Verschlechterung der Zähigkeits- und Dehnungseigenschaften der erfindungsgemäßen Legierung.

Vorteilhaft kann eine Wärmebehandlung des Rohres zur Verbesserung der Umformbarkeit durch Innenhochdruckumformen bzw. vor dem Innenhochdruckumformen entfallen, wenn Umformgrade bei der Herstellung des Warm- oder Kaltbandes von weniger als 80 % eingestellt werden.

Bei höheren Umformgraden kann eine dann eventuell notwendige Wärmebehandlung vorteilhaft unmittelbar nach dem Rohreinformen und Längsnahtschweißen erfolgen, wobei die Wärmebehandlung in einem Durchlaufofen oder einer stationären Ofeneinheit (beispielsweise Herdofen, Muffelofen) oder durch das temperierte Wirkmedium an sich erfolgen kann. Die Temperatur für die Wärmebehandlung liegt dabei zwischen 80 °C und 0,9 * TS (Schmelztemperatur der jeweiligen Legierung in °C).

Grundsätzlich kommen als endabmessungsnahe Gießverfahren das horizontale Bandgießen und das vertikale Bandgießen (z.B. Zwei-Rollen-Bandgießen) in Betracht. Hiermit werden Banddicken des Vorbandes von etwa 1 bis 30 mm, vorteilhaft 1 bis 20 mm, erzeugt.

Vorteilhaft erfolgt das Bandgießen in einer inertisierenden oder reduzierenden oder leicht oxidierenden Atmosphäre mit einen Sauerstoffanteil von unter 10 Vol%. Hierdurch werden Seigerungen und selektive Oxidation und damit Heißrisse beim Warmwalzen deutlich vermindert.

Das über endabmessungsnahe Gießverfahren erzeugte Vorband oder die Bramme wird anschließend warmgewalzt, wobei die Warmwalzstarttemperatur mindestens 900 bis 1200 °C und die Endwalztemperatur mindestens 650 °C beträgt. Das Warmwalzen des endabmessungsnah erzeugten Vorbandes erfolgt erfindungsgemäß mit maximal 6 Walzstichen, vorteilhaft mit 2 bis 4 Walzstichen. Anschließend wird das Warmband zu einem Coil aufgewickelt und entweder direkt zu einem Rohr weiterverarbeitet oder es wird als kaltgewalztes Band weiterverarbeitet.

Alternativ können zum Beispiel bei kurzen Rohrlängen, von dem aufgewickelte Warmoder Kaltband auch Tafeln abgeschnitten und anschließend weiterverarbeitet werden.

Bei Vorbanddicken unter 2 mm kann aufgrund des geringen Umformgrades auf ein Warmwalzen verzichtet werden. Das Band wird stattdessen direkt einem Kaltwalzvorgang unterzogen.

Als Warmband werden nach dem Walzen typischerweise Dicken von 1,5 mm bis 15 mm und als kaltgewalztes Band Dicken von 0,2 bis 12 mm erreicht.

## Patentansprüche

1. Verfahren zur Herstellung von mit Innenhochdruck umgeformten Rohren aus einem hochlegierten Stahl mit hohem Kaltumformvermögen, mit TRIP- und/oder TWIP-Eigenschaften und mit einem teilweise oder vollständig austenitischen Gefüge mit mindestens 5 % Restaustenit, umfassend die Arbeitsschritte:
- Erschmelzen einer Stahlschmelze mit folgender chemischer Zusammensetzung (in Gew.-%):
Cr: 7 bis 20
Mn: 2 bis 9
Ni: bis zu 9
C: 0,005 bis 0,4
N: 0,002 bis 0,3
Rest Eisen einschließlich unvermeidbarer stahlbegleitender Elemente, mit optionaler Zulegierung folgender Elemente (in Gew.-%):
Al: 0 bis 3
Si: 0 bis 2
Mo: 0,01 bis 3
Cu: 0,005 bis 4
V: 0 bis 2
Nb: 0 bis 2
Ti: 0 bis 2
Sb: 0 bis 0,5
B: 0 bis 0,5
Co: 0 bis 5
W: 0 bis 3
Zr: 0 bis 2
Ca: 0 bis 0,1
P: 0 bis 0,6
S: 0 bis 0,2
- Herstellen eines Vorbandes mittels eines endabmessungsnahen horizontalen oder vertikalen Gießverfahrens oder Herstellen von Brammen mittels eines horizontalen oder vertikalen Brammen- oder Dünnbrammengießverfahrens, wobei als endabmessungsnahe Gießverfahren das horizontale Bandgießen oder das vertikale Bandgießen verwendet werden, wobei Banddicken des Vorbandes von 1 bis 30 mm, vorteilhaft 1 bis 20 mm, erzeugt werden,
- Herstellen eines Warmbandes durch Warmwalzen des Vorbandes mit einer Dicke größer oder gleich 2 mm oder durch Warmwalzen der Bramme, wobei das gegossene Vorband oder die Bramme warmgewalzt wird, wobei die Warmwalzstarttemperatur mindestens 900 bis 1200 °C und die Endwalztemperatur mindestens 650 °C beträgt,
- Optionales Kaltwalzen des Warmbandes oder Kaltwalzen des Vorbandes mit einer Dicke kleiner als 2 mm,
- Einformen des Warm- oder Kaltbandes und Verschweißen zu einem Rohr und
- Innenhochdruckumformen des Rohres mittels eines Wirkmediums und das Wirkmedium auf 40 bis 300 °C , vorzugsweise auf 80 bis 240 °C, temperiert wurde.

2. Verfahren nach Anspruch 1, **dadurch gekennzeichnet, dass** der Stahl (in Gew.-%) enthält:
Cr: 10 bis 18
Ni: 2 bis 6

3. Verfahren nach Anspruch 1 und 2, **dadurch gekennzeichnet, dass** der Cr-Gehalt 12 bis 17 Gew.-% beträgt und/oder der Mn-Gehalt 2 bis 7 Gew.-% beträgt und/oder der Ni-Gehalt 0,5 bis 5 Gew.-% beträgt und/oder der Stahl Si in Gehalten von 0,03 bis 2 Gew.-% enthält und/oder der Stahl Cu in Gehalten von 0,05 bis 4 Gew.-% enthält und/oder der Stahl Sb in Gehalten von 0,005 bis 0,5 Gew.-% enthält und/oder der Stahl B in Gehalten von 0,0002 bis 0,5 Gew.-% enthält. und/oder der Stahl Co in Gehalten von 0,05 bis 5 Gew.-% enthält. und/oder der Stahl W in Gehalten von 0,005 bis 3 Gew.-% enthält. und/oder dass der Stahl Zr in Gehalten von 0,005 bis 2 Gew.-% enthält und/oder der Stahl Ca in Gehalten von 0,0005 bis 0,1 Gew.-% enthält und/oder der Stahl P in Gehalten von 0,008 bis 0,6 Gew.-% enthält und/oder der Stahl S in Gehalten von 0,01 bis 0,2 Gew.-% enthält.

4. Verfahren nach einem oder mehreren der Ansprüche 1 bis 3, **dadurch gekennzeichnet, dass** der Stahl mindestens eines oder mehrere der Legierungselemente V, Nb oder Mo mit einem Mindestgehalt von 0,005 Gew.-% enthält, wobei die Summe dieser drei Legierungselemente < 5 Gew.-% beträgt.

5. Verfahren nach einem oder mehreren der Ansprüche 1 bis 4, **dadurch gekennzeichnet, dass** der Stahl Ti in Gehalten von 0,005 bis 2 Gew.-% enthält und der Gehalt an N < 300 ppm beträgt.

6. Verfahren nach einem oder mehreren der Ansprüche 1 bis 5, **dadurch gekennzeichnet, dass** der Stahl Al in Gehalten von 0,05 bis 3 Gew.-% enthält, wobei der Gehalt an N < 300 ppm beträgt.

7. Verfahren nach einem oder mehreren der Ansprüche 1 bis 6, **dadurch gekennzeichnet, dass** das Warmwalzen des endabmessungsnah erzeugten Vorbands mit maximal 6 Walzstichen, vorteilhaft mit 2 bis 4 Walzstichen, durchgeführt wird.

8. Verfahren nach einem oder mehreren der Ansprüche 1 bis 7, **dadurch gekennzeichnet, dass** das Warm- oder kaltgewalzte Band vom Coil abgewickelt und zu Tafeln geschnitten wird.

9. Verfahren nach einem oder mehreren der Ansprüche 1 bis 8, **dadurch gekennzeichnet, dass** das Warmband nach dem Walzen eine Dicke von 1,5 mm bis 15 mm und das kaltgewalzte Band eine Dicke von 0,2 bis 12 mm aufweist.

10. Verfahren nach einem oder mehreren der Ansprüche 1 bis 9, **dadurch gekennzeichnet, dass** das Verschweißen des Rohres mittels Hochfrequenz-Induktionsschweißen oder Laserschweißen erfolgt.

## Claims

1. Method for producing pipes consisting of a high-alloy steel which are formed by means of internal high pressure, said steel having high cold deformability, having TRIP and/or TWIP properties and having a partially or completely austenitic microstructure with at least 5% residual austenite, comprising the working steps of:
- melting a steel melt with the following chemical composition (in wt.%):
Cr: 7 to 20
Mn: 2 to 9
Ni: up to 9
C: 0.005 to 0.4
N: 0.002 to 0.3
with the remainder being iron including unavoidable, steel-associated elements, with optional addition by alloying of the following elements (in wt.%):
Al: 0 to 3
Si: 0 to 2
Mo: 0.01 to 3
Cu: 0.005 to 4
V: 0 to 2
Nb: 0 to 2
Ti: 0 to 2
Sb: 0 to 0.5
B: 0 to 0.5
Co: 0 to 5
W: 0 to 3
Zr: 0 to 2
Ca: 0 to 0.1
P: 0 to 0.6
S: 0 to 0.2
- producing a pre-strip by means of a horizontal or vertical casting process approximating the final dimensions or producing slabs by means of a horizontal or vertical slab or thin slab casting process, the casting process approximating the final dimensions which is used is horizontal strip casting or vertical strip casting, wherein strip thicknesses of the pre-strip of 1 to 30 mm, advantageously 1 to 20 mm, are produced,
- producing a hot strip by hot-rolling the pre-strip with a thickness greater than or equal to 2 mm or by hot-rolling the slab, wherein the cast pre-strip or the slab is hot-rolled, wherein the hot-rolling starting temperature is at least 900 to 1200°C and the end rolling temperature is at least 650°C,
- optionally cold-rolling the hot strip or cold-rolling the pre-strip with a thickness less than 2 mm,
- moulding the hot strip or cold strip and welding it to form a pipe, and
- internal high pressure forming of the pipe by means of an active medium and the active medium has been tempered to 40 to 300°C, preferably to 80 to 240°C.

2. Method as claimed in claim 1, **characterised in that** the steel contains (in wt.%):
Cr: 10 to 18
Ni: 2 to 6

3. Method as claimed in claim 1 and 2, **characterised in that** the Cr content is 12 to 17 wt.% and/or the Mn content is 2 to 7 wt.% and/or the Ni content is 0.5 to 5 wt.% and/or the steel contains Si in contents of 0.03 to 2 wt.% and/or the steel contains Cu in contents of 0.05 to 4 wt.% and/or the steel contains Sb in contents of 0.005 to 0.5 wt.% and/or the steel contains B in contents of 0.0002 to 0.5 wt.% and/or the steel contains Co in contents of 0.05 to 5 wt.% and/or the steel contains W in contents of 0.005 to 3 wt.% and/or the steel contains Zr in contents of 0.005 to 2 wt.% and/or the steel contains Ca in contents of 0.0005 to 0.1 wt.% and/or the steel contains P in contents of 0.008 to 0.6 wt.% and/or the steel contains S in contents of 0.01 to 0.2 wt.%.

4. Method as claimed in one or more of claims 1 to 3, **characterised in that** the steel contains at least one or more of the alloy elements V, Nb or Mo having a minimum content of 0.005 wt.%, wherein the total of these three alloy elements is < 5 wt.%.

5. Method as claimed in any one or more of claims 1 to 4, **characterised in that** the steel contains Ti in contents of 0.005 to 2 wt.% and the content of N is < 300 ppm.

6. Method as claimed in any one or more of claims 1 to 5, **characterised in that** the steel contains Al in contents of 0.05 to 3 wt.%, wherein the content of N is < 300 ppm.

7. Method as claimed in any one or more of claims 1 to 6, **characterised in that** the pre-strip produced approximating the final dimensions is hot-rolled with a maximum of 6 rolling passes, advantageously with 2 to 4 rolling passes.

8. Method as claimed in any one or more of claims 1 to 7, **characterised in that** the hot-rolled strip or cold-rolled strip is unwound from the coil and cut into sheets.

9. Method as claimed in any one or more of claims 1 to 8, **characterised in that** after the rolling process the hot strip has a thickness of 1.5 mm to 15 mm and the cold-rolled strip has a thickness of 0.2 to 12 mm.

10. Method as claimed in any one or more of claims 1 to 9, **characterised in that** the pipe is welded by means of high frequency induction welding or laser welding.

## Revendications

1. Procédé de fabrication de tubes formés à haute pression interne à partir d'un acier fortement allié ayant des propriétés de formage à froid élevées, des propriétés TRIP et/ou TWIP et une structure partiellement ou complètement austénitique avec au moins 5 % d'austénite résiduelle, le procédé comprenant les étapes suivantes:
- obtenir par fusion de l'acier fondu ayant la composition chimique suivante (en % en poids):
Cr: 7 à 20
Mn: 2 à 9
Ni: jusqu'à 9
C: 0,005 à 0,4
N: 0,002 à 0,3
le reste étant du Fer incluant des éléments inévitables accompagnant l'acier, avec ajout facultatif des éléments suivants (en % en poids):
Al: 0 à 3
Si: 0 à 2
Mo: 0,01 à 3
Cu: 0,005 à 4
V: 0 à 2
Nb: 0 à 2
Ti: 0 à 2
Sb: 0 à 0,5
B: 0 à 0, 5
Co: 0 à 5
W: 0 à 3
Zr: 0 à 2
Ca: 0 à 0,1
P: 0 à 0,6
S: 0 à 0,2
- réaliser une pré-bande au moyen d'un procédé de coulée horizontale ou verticale proche de la dimension finale ou produire des brames au moyen d'un procédé de coulée horizontale ou verticale de brames ou de brames minces, la coulée en bande horizontale ou la coulée en bande verticale étant utilisée comme procédé de coulée proche de la dimension finale, des épaisseurs de bande de la pré-bande de 1 à 30 mm, avantageusement de 1 à 20 mm, étant générées,
- réaliser une bande à chaud par laminage à chaud de la pré-bande avec une épaisseur supérieure ou égale à 2 mm ou par laminage à chaud de la brame, la pré-bande coulée ou la brame étant laminée à chaud, la température de départ de laminage à chaud étant d'au moins 900 à 1200 °C et la température de laminage final étant d'au moins 650 °C,
- laminage à froid éventuel de la bande à chaud ou laminage à froid de la pré-bande avec une épaisseur inférieure à 2 mm,
- formage de la bande chaude ou froide et soudage pour former un tube et
- formage sous haute pression interne du tube au moyen d'un milieu actif et le milieu actif ayant été régulé en température de 40 à 300 °C, de préférence de 80 à 240 °C.

2. Procédé selon la revendication 1, **caractérisé en ce que** l'acier contient (en % en poids):
Cr: 10 à 18
Ni: 2 à 6

3. Procédé selon les revendications 1 et 2, **caractérisé en ce que** la teneur en Cr est de 12 à 17 % en poids et/ou la teneur en Mn est de 2 à 7 % en poids et/ou la teneur en Ni 0,5 à 5 % en poids et/ou l'acier contient du Si à des teneurs allant de 0,03 à 2 % en poids et/ou l'acier contient du Cu à des teneurs allant de 0,05 à 4 % en poids et/ou l'acier contient du Sb à des teneurs allant de 0,005 à 0,5 % en poids et/ou l'acier contient du B à des teneurs allant de 0,0002 à 0,5 % en poids et/ou l'acier contient du Co à des teneurs allant de 0,05 à 5 % en poids et/ou l'acier contient du W à des teneurs allant de 0,005 à 3 % en poids et/ou l'acier contient du Zr à des teneurs allant de 0,005 à 2 % en poids et/ou l'acier contient du Ca à des teneurs allant de 0,0005 à 0,1 % en poids et/ou l'acier contient du P à des teneurs allant 0,008 à 0,6 % en poids et/ou l'acier contient du S à des teneurs allant de 0,01 à 0,2 % en poids.

4. Procédé selon l'une au moins des revendications 1 à 3, **caractérisé en ce que** l'acier contient l'un au moins des éléments en alliage V, Nb ou Mo avec une teneur minimale de 0,005 % en poids, la somme de ces trois éléments en alliage < 5% en poids.

5. Procédé selon l'une au moins des revendications 1 à 4, **caractérisé en ce que** l'acier contient du Ti à des teneurs de 0,005 à 2% en poids et la teneur en N est < 300 ppm.

6. Procédé selon l'une au moins des revendications 1 à 5, **caractérisé en ce que** l'acier contient de l'Al à des teneurs allant de 0,05 à 3 % en poids, la teneur en N étant < 300 ppm.

7. Procédé selon l'une au moins des revendications 1 à 6, **caractérisé en ce que** le laminage à chaud de la pré-bande proche de la dimension finale est réalisé avec un maximum de 6 passes de rouleau, avantageusement 2 à 4 passes de rouleau.

8. Procédé selon l'une au moins des revendications 1 à 7, **caractérisé en ce que** la bande laminée à chaud ou à froid est déroulée de la bobine et découpée en plaques.

9. Procédé selon l'une au moins des revendications 1 à 8, **caractérisé en ce que** la bande chaude après laminage a une épaisseur de 1,5 mm à 15 mm et la bande laminée à froid a une épaisseur de 0,2 à 12 mm.

10. Procédé selon l'une au moins des revendications 1 à 9, **caractérisé en ce que** le soudage du tube est réalisé par un soudage par induction à haute fréquence ou un soudage au laser.
